# EUROPÄISCHE PATENTSCHRIFT

(11) **EP 1 836 887 B1**
(45) Veröffentlichungstag und Bekanntmachung des Hinweises auf die Patenterteilung: **23.07.2014**
(21) Anmeldenummer: 07005879.7
(22) Anmeldetag: 22.03.2007
(51) Int. Cl.: A01C 7/10, A01C 19/04

(54) **Sämaschine**
Sowing machine
Machine à semer

(30) Priorität: 25.03.2006 DE 102006013891
(43) Veröffentlichungstag der Anmeldung: 26.09.2007
(73) Patentinhaber: Rabe Agri GmbH, 49152 Bad Essen (DE)
(72) Erfinder: Gehrke, Rudolf, Dipl.-Ing., 49152 Bad Essen (DE)
(74) Vertreter: Tappe, Hartmut

(56) Entgegenhaltungen:
- EP-A1- 0 635 195
- DE-A1- 3 821 738
- DE-U1- 29 613 866

## Beschreibung

Die Erfindung betrifft eine Sämaschine gemäß dem Oberbegriff des Anspruches 1. Derartige Sämaschinen zum Ausbringen von Saatgut sind in vielfacher Weise in der Landwirtschaft bekannt. Einen besonders hohen Stellenwert hat bei Ausbringen von Saatgut die Aussaatgenauigkeit der Sämaschine. Damit die Sämaschine die gewünschte Aussaatmenge pro Flächeneinheit gleichmäßig verteilt, wird die Sämaschine in der Regel vor der Aussaat auf das auszubringende Saatgut eingestellt und zur Kontrolle der Einstellung wird eine Abdrehprobe durchgeführt. Stimmt die Saatgutmenge der Abdrehprobe nicht mit der gewünschten Aussaatmenge überein, so wird die Einstellung der Aussaatmenge korrigiert.

Für die Durchführung einer Abdrehprobe sind verschiedene Lösungen bekannt. So wird bei einer Sämaschine mit Bodenradantrieb zur Durchführung einer Abdrehprobe mit einer Abdrehkurbel eine bestimmte Anzahl von Kurbelumdrehungen gedreht. Das von der Sävorrichtung ausgebrachte Saatgut wird in einem oder mehreren Auffangbehältern aufgefangen. Anschließend wird der Inhalt des/der Auffangbehälter/s gewogen und mit der gewünschten Aussaatmenge verglichen.

Bekannt ist auch, dass bei einigen Sämaschinenbauarten zur Durchführung der Abdrehprobe die Abdrehkurbel in die Felge des Laufrades oder auf die Achse des Bodenrades gesteckt wird. Nachteilig ist dabei, dass die Abdrehprobe nur bei einem vom Boden abgehobenen Rad durchgeführt werden kann und die Bedienperson kann die Abdrehprobe nur in gebückter Haltung durchführen.

Bei einer weiteren bekannten Sämaschinenbauart ist die Abdrehkurbel zur Durchführung der Abdrehprobe an einem vom Antriebsrad (Laufrad) entkuppelbaren Kettentrieb angebracht, wie es die Gebrauchsmusterschrift DE 296 13 866 U1 offenbart. Diese Sämaschine weist auf dem Boden abstützende Antriebsräder auf, die zum Antrieb der Säräder dienen. Der Saatkasten mit der Sävorrichtung ist oberhalb der Antriebsräder angeordnet und unterhalb der Sävorrichtung befinden sich die versetzt angeordneten höhenbeweglichen Säschare. Auf der rechten Seite der Drillmaschine ist die Abdrehkurbel mit dem Kettentrieb angebracht. Die Abdrehkurbel muss dabei während der Abdrehprobe nach rechts gedreht werden.

Der Vorteil dieser Anordnung der Abdrehkurbel ist, dass das Antriebsrad nicht vom Boden abgehoben werden muss und dass die Bedienperson die Abdrehkurbel in aufrechter Haltung drehen kann. Nachteilig ist jedoch auch der technische Aufwand an Antriebselementen. Zum Abdrehen mit einem Drehsinn nach rechts ist die Abdrehkurbel nur auf der rechten Seite der Sämaschine bedienbar. Ein weiterer Nachteil ist, dass die Abdrehkurbel nicht direkt in den Antrieb zwischen dem Antriebsrad und dem Getriebe eingreifen kann, weil in der Regel zwischen dem Antriebsrad und der Getriebeeingangswelle ein Übersetzungsverhältnis von < 1 besteht, so dass die Bedienperson zur Durchführung einer Abdrehprobe mehr Kurbelumdrehungen machen muss als bei einer Abdrehprobe über das Antriebsrad.

Der Erfindung liegt die Aufgabe zugrunde, eine verbesserte Sämaschine vorzuschlagen, die die Nachteile des Standes der Technik vermeidet und in vorteilhafter Weise die Durchführung der Abdrehprobe erleichtert.

Diese Aufgabe wird erfindungsgemäß nach den Merkmalen des Patentanspruches 1 gelöst, wobei die weiteren Patentansprüche in vorteilhafter Weise ergänzende Lösungen zeigen.

Die erfindungsgemäße Sämaschine weist einen Rahmen mit einem Saatgutbehälter auf, wobei die Säschare am Rahmen angeordnet sind. Abgestützt wird die Sämaschine auf dem Boden entweder von einem Laufrad oder mehreren Laufrädern. Es ist auch möglich, den Rahmen der Sämaschine derart zu gestalten, dass sich die Sämaschine auf einer Bodenwalze und/oder einem Bodenbearbeitungsgerät abstützt.

Auf der linken Seite der Sämaschine sind das Getriebe mit dem Antrieb vom Laufrad, die Einstellvorrichtung zur Verstellung des Übersetzungsverhältnisses zwischen dem Laufrad und der Sävorrichtung sowie die Abdrehvorrichtung angeordnet. Durch diese Anordnung der Abdrehvorrichtung und der Einstellvorrichtung für das Getriebe auf der linken Seite der Sämaschine verbessert sich die Bedienbarkeit der Sämaschine. Der Weg von der Schlepperkabine zur Abdreh- und Einstellvorrichtung ist sehr kurz, weil die Bedienperson zum Einstellen der Sämaschine nicht um den Schlepper oder um die Sämaschine herumlaufen muss, da bei modernen Schleppern der Aufstieg zum Arbeitsplatz in der Kabine nur noch auf der linken Seite des Schleppers angeordnet ist.

Vorteilhaft ist auch das Vorgelegegetriebe der Abdrehvorrichtung. Das Übersetzungsverhältnis zwischen dem Laufrad und der Getriebeeingangswelle sowie zwischen der Abdrehkurbel am Vorgelegegetriebe und der Getriebeeingangswelle kann gleich sein, so dass die Abdrehkurbel sowohl am Rad als auch an der Abdrehvorrichtung mit der gleichen Anzahl an Kurbelumdrehungen bedienbar ist. Bei auf dem Boden stehenden Laufrad besteht die Möglichkeit, die Abdrehprobe mittels des Vorgelegegetriebes durchzuführen. Ist das Laufrad vom Boden abgehoben, so kann die Abdrehprobe am Laufrad durchgeführt werden. Dabei dreht die Bedienperson mit der Abdrehkurbel das Laufrad mit einer bestimmten Anzahl an Umdrehungen. Während der Abdrehprobe fällt das Saatgut von der Sävorrichtung in die Auffangmulde. Nach dem Abdrehvorgang wird das aufgefangene Saatgut gewogen und mit der gewünschten Ausbringmenge verglichen. Bei einer Abweichung zwischen der Abdrehmenge und der gewünschten Ausbringmenge muss die Getriebeeinstellung korrigiert werden.

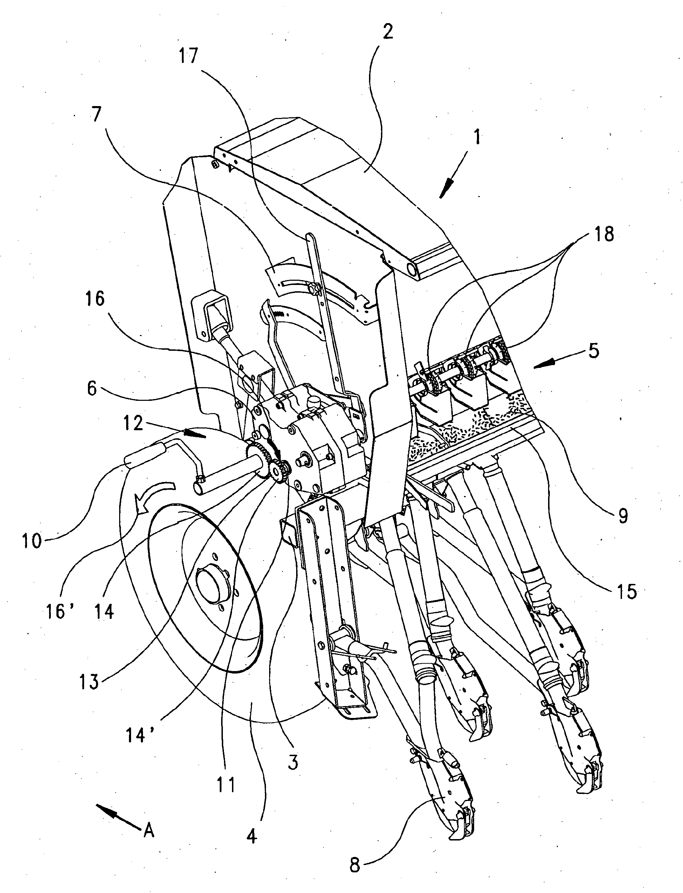

Weitere Einzelheiten der Erfindung sind den Unteransprüchen, der Beispielbeschreibung und der Zeichnung zu entnehmen. Die Zeichnung zeigt eine Sämaschine in einer Teilanansicht und in perspektivischer Darstellung.

Die erfindungsgemäße Sämaschine 1 stützt sich auf den Laufrädern 4 ab, wobei nur das linke Laufrad 4 dargestellt ist. Am Rahmen 3 sind die Säschare 8 nebeneinander beabstandet angeordnet und oberhalb der Säschare 8 ist der Saatgutbehälter 2 mit dem Getriebe 6, der Abdrehvorrichtung 12 und der Sävorrichtung 5 angeordnet. Die Abdrehvorrichtung 12 und das Getriebe 6 mit der Getriebeeinstellvorrichtung 7 befinden sich in Arbeitsrichtung A auf der linken Seite der Sämaschine 1. Mit dem im Getriebe 6 drehbar gelagerten Getriebestellhebel 17 wird das Übersetzungsverhältnis zwischen dem Laufrad 4 und dem Särad 18 verstellt. Unterhalb des Särades 18 befindet sich während der Abdrehprobe die Auffangmulde 15 zum Auffangen des vom Särad 18 ausgebrachten Saatgutes 9.

Die Abdrehvorrichtung 12, die aus der Abdrehkurbel 10 und dem Vorgelegegetriebe 13 besteht, befindet sich außerhalb vom Getriebe 6. Es besteht jedoch die Möglichkeit, das Vorgelegegetriebe 13 in das Getriebe 6 oder in den nicht dargestellten Antrieb zwischen dem Laufrad 4 und dem Getriebe 6 zu integrieren. Eine weitere Möglichkeit der Anordnung des Getriebes 6 ist, dass dieses unterhalb des Saatgutbehälters 2 angeordnet ist. Die Bedienung der Getriebeeinstellvorrichtung 7 und der Abdrehkurbel 10 ist dabei vorteilhaft auf der linken Seite der Sämaschine 1 möglich.

Das kleine Stirnrad 14' ist mit der Getriebeeingangswelle 11 formschlüssig verbunden und das große Stirnrad 14 hat eine Verbindung mit der Abdrehkurbel 10, so dass die Abdrehkurbel 10 während des Abdrehvorganges mit einem Drehsinn 16 nach rechts bedienbar ist. Das linke Laufrad 4 dreht sich während der Arbeit in der Arbeitsrichtung A, jedoch mit einem Drehsinn 16' nach links. Nach der Durchführung der Abdrehprobe besteht die Möglichkeit, die Abdrehkurbel 10 werkzeuglos vom Vorgelegegetriebe 13 zu trennen und in einer nicht dargestellten Halterung auf der linken Seite der Sämaschine 1 abzulegen.

### Bezugszeichenliste

- 1: Sämaschine
- 2: Saatgutbehälter
- 3: Rahmen
- 4: Laufrad
- 5: Sävorrichtung
- 6: Getriebe
- 7: Getriebeinstellvorrichtung
- 8: Säschar
- 9: Saatgut
- 10: Abdrehkurbel
- 11: Getriebeeingangswelle
- 12: Abdrehvorrichtung
- 13: Vorgelegegetriebe
- 14: Stirnrad
- 14': Stirnrad
- 15: Auffangmulde
- 16: Drehsinn (rechts)
- 16': Drehsinn (links)
- 17: Getriebestellhebel
- 18: Särad

- A: Arbeitsrichtung

## Patentansprüche

1. Sämaschine **(1)** mit einem Rahmen **(3)**, der sich über Läufräder **(4)** oder einer Bodenwalze auf dem Boden abstützt und am unteren Ende des Rahmens **(3)** nebeneinander auf Abstand in der Höhe schwenkbar angeordnete Säschare **(8)** aufweist, die das Saatgut **(9)** in den Boden ablegen, wobei oberhalb der Säschare **(8)** ein Saatgutbehälter **(2)** mit einer Sävorrichtung **(5)** angeordnet ist und auf der linken Seite der Sämaschine **(1)** ein Getriebe **(6)** mit einer Abdrehvorrichtung **(12)** angeordnet ist, **dadurch gekennzeichnet, dass** die Abdrehvorrichtung **(12)** zwischen der Abdrehkurbel **(10)** und der Getriebeeingangswelle **(11)** ein Vorgelegegetriebe **(13)** aufweist und das Übersetzungsverhältnis zwischen der Abdrehkurbel **(10)** und der Getriebe-eingangswelle **(11)** < 1 ist, und dass vorzugsweise das Übersetzungsverhältnis zwischen dem Laufrad **(4)** und der Getriebeeingangswelle **(11)** sowie zwischen der Abdrehkurbel **(10)** und der Getriebeeingangswelle **(11)** gleich ist.

2. Sämaschine **(1)** nach Anspruch 1, **dadurch gekennzeichnet, dass** das Vorgelegegegetriebe **(13)** Stirnräder **(14,14')** unterschiedlicher Größe aufweist.

3. Sämaschine **(1)** nach Anspruch 1, **dadurch gekennzeichnet, dass** das Vorgelegegetriebe **(13)** Bestandteil des Antriebes zwischen dem Laufrad **(4)** und der Getriebeeingangswelle **(11)** ist.

4. Sämaschine **(1)** nach Anspruch 1, **dadurch gekennzeichnet, dass** das Stirnrad **(14')** Bestandteil der Getriebeeingangswelle **(11)** ist.

5. Sämaschine **(1)** nach Anspruch 1, **dadurch gekennzeichnet, dass** das Stirnrad **(14)** und die Abdrehkurbel **(10)** unlösbar miteinander verbunden sind.

6. Sämaschine **(1)** nach Anspruch 1, **dadurch gekennzeichnet, dass** die Abdrehkurbel **(10)** mit dem Stirnrad **(14)** werkzeuglos verbindbar und lösbar ist.

7. Sämaschine **(1)** nach einem oder mehreren der vorgenannten Ansprüche, **dadurch gekennzeichnet, dass** die Abdrehkurbel **(10)** zum Durchführen der Abdrehprobe einen Drehsinn **(16)** nach rechts aufweist.

## Claims

1. A seeding machine (1) with a frame (3) which is supported on the ground via running wheels (4) or via a ground roller and which has seeding shares (8) at the lower end of the frame (3), the shares being arranged next to one another at a distance so as to be pivotable in height and depositing seeds (9) in the ground, wherein a seed container (2) with a seeding device (5) is arranged above the seeding shares (8) and wherein, on the left side of the seeding machine (1), a gear (10) with a turning device (12) is arranged,
**characterised in that**
the turning device (12) has a reduction gear (13) between the turning crank (10) and the gear input shaft (11) and **in that** the gear ratio is <1 between the turning crank (10) and the gear input shaft (11), and **in that** the gear ratio is preferably identical between the running wheel (4) and the gear input shaft (11) as well as between the turning crank (10) and the gear input shaft (11).

2. The seeding machine (1) according to claim 1,
**characterised in that**
the reduction gear (13) has spur wheels (14,14') of different sizes.

3. The seeding machine (1) according to claim 1,
**characterised in that**
the reduction gear (13) is part of the drive unit between the running wheel (4) and the gear input shaft (11).

4. The seeding machine (1) according to claim 1,
**characterised in that**
the spur wheel (14') is part of the gear input shaft (11).

5. The seeding machine (1) according to claim 1,
**characterised in that**
the spur wheel (14) and the turning crank (10) are non-detachably joined to each other.

6. The seeding machine (1) according to claim 1,
**characterised in that**
the turning crank (10) can be joined to and detached from the spur wheel (14) without using a tool.

7. The seeding machine (1) according to one or more of the preceding claims,
**characterised in that**
the turning crank (10) has a rotational direction (16) to the right for carrying out the turning test.

## Revendications

1. Semoir (1) avec un cadre (3), qui est soutenu sur le sol à travers des roues (4) mobiles ou à travers d'un rouleau de sol et qui présente, sur l'extrémité inférieure du cadre (3), des socs (8) de semoir, qui sont disposés côté à côté à une distance de façon à pouvoir basculer en hauteur et qui déposent des semences (9) dans le sol, dans lequel un réservoir (2) pour semence avec un dispositif (5) à semer est disposé au-dessus des socs (8) de semoir et dans lequel, à gauche du semoir (1), un engrenage (10) avec un dispositif (12) de rotation est disposé,
**caractérisé en ce que**
le dispositif (12) de rotation présente un engrenage (13) réducteur de vitesse entre la manivelle (10) de rotation et l'arbre (11) d'entrée d'engrenage et **en ce que** le rapport de transmission est <1 entre la manivelle (10) de rotation et l'arbre (11) d'entrée d'engrenage, et **en ce que** le rapport de transmission est de préférence identique entre la roue (4) mobile et l'arbre (11) d'entrée d'engrenage ainsi qu'entre la manivelle (10) de rotation et l'arbre (11) d'entrée d'engrenage.

2. Semoir (1) selon la revendication 1,
**caractérisé en ce que**
l'engrenage (13) réducteur de vitesse présente des roues (14,14') cylindriques de dimensions différentes.

3. Semoir (1) selon la revendication 1,
**caractérisé en ce que**
l'engrenage (13) réducteur de vitesse fait partie du mécanisme d'entraînement entre la roue (4) mobile et l'arbre (11) d'entrée d'engrenage.

4. Semoir (1) selon la revendication 1,
**caractérisé en ce que**
la roue (14') cylindrique fait partie de l'arbre (11) d'entrée d'engrenage.

5. Semoir (1) selon la revendication 1,
**caractérisé en ce que**
la roue (14) cylindrique et la manivelle (10) de rotation sont reliées l'une avec l'autre de façon inamovible.

6. Semoir (1) selon la revendication 1,
**caractérisé en ce que**
la manivelle (10) de rotation peut être reliée avec et est amovible de la roue (14) cylindrique sans outil.

7. Semoir (1) selon une ou plusieurs des revendications précédentes,
**caractérisé en ce que**
la manivelle (10) de rotation présente un sens (16) de rotation à droite pour la réalisation de l'essai de la rotation.
